# EUROPÄISCHE PATENTANMELDUNG

(11) **EP 2 347 854 A1**
(43) Veröffentlichungstag der Anmeldung: **27.07.2011**
(21) Anmeldenummer: 10151509.6
(22) Anmeldetag: 25.01.2010
(51) Int. Cl.: B23Q 1/54, B23Q 3/10, F16B 21/16

(54) **Zweiachsige Drehtischanordnung**

(71) Anmelder: Peter Lehmann AG, 3552 Bärau (CH)
(72) Erfinder: Lehmann, Peter, 3550 Langnau (CH); Lehmann, Heinz, 3507 Biglen (CH); Lehmann, Hansruedi, 3532 Mirchel (CH); Muralt, Thomas, 3550 Langnau (CH)
(74) Vertreter: AMMANN PATENTANWÄLTE AG BERN

(57) **Zusammenfassung**

Eine Drehtischanordnung (1, 72) mit mindestens zwei Achsen wird durch Verbinden zweier Antriebe mittels eines Verbindungsteils (30, 72)) erstellt. Das Verbindungsteil (30, 72) erlaubt dabei die Anbringung des zweiten Antriebs (5), der im Drehtisch (1) durch den ersten Antrieb (3) bewegt wird, in mindestens zwei Positionen oder auch nur einer einzigen. Durch eine Mehrzahl von Positionen ist die Drehtischanordnung (1) leichter an geänderte Anforderungen anpassbar. Die mit geringem Aufwand mögliche Anbringung des Verbindungsteils ist die Drehtischanordnung einfacher herzustellen.

## Beschreibung

Die vorliegende Erfindung bezieht sich auf eine Drehtischanordnung mit mindestens zwei Achsen gemäss Oberbegriff des Patentanspruchs 1. Im Weiteren bezieht sie sich auf ein Verfahren zur Herstellung einer solchen Drehtischanordnung.

Drehtische werden eingesetzt, um auf Werkzeugmaschinen wie z.B. Bearbeitungszentren, Schleifmaschinen, Graviermaschinen, usw. zusätzliche Achsen nachzurüsten. Durch einen Drehtisch ist es möglich, das Werkstück in eine Position zu bringen, in der die Bearbeitungszone dem Werkzeug besser oder überhaupt zugänglich ist. Oft ist es dabei nötig, das Werkstück um zwei Achsen zu schwenken. Derartige Tische sind bekannt. Es werden jedoch viele Varianten hergestellt in Anpassung an den jeweiligen Verwendungszweck. Oft war es nötig, für ein Produktionsvorhaben einen speziell angepassten zweiachsigen Drehtisch herzustellen. Die Notwendigkeit, viele verschiedene Varianten vorzusehen, die jeweils in entsprechend kleinen Stückzahlen produziert werden, beziehungsweise die Notwendigkeit zu Einzelanfertigungen führt zu hohen Kosten. Regelmässig tritt auch der Fall ein, dass nach Beendigung eines Produktionsvorhabens der daran angepasste Zweiachs-Drehtisch nicht mehr verwendet werden kann. Dieses relativ teure Anlagenteil wird somit wertlos.

Die Konstruktion derartiger Drehtische ist auch relativ aufwendig. Es herrschen relativ enge Platzverhältnisse und während der Bearbeitung eine harsche Umgebungsbedingungen wegen herumfliegender Werkstückspäne und -splitter und herumspritzender Hilfsflüssigkeiten. Bei motorisierten Drehtischen, die für die vollautomatische Bearbeitung nötig sind, muss daher ein hoher Aufwand getrieben werden, um die empfindlichen Teile vor äusseren Einwirkungen zu schützen. Bekannt sind auch Ausführungen, die eine Kombination zwischen einem motorischen Drehtisch und einem manuell verstellbaren Drehtisch umfassen. Der Einsatzbereich ist jedoch eingeschränkt, insbesondere ist die Wahrscheinlichkeit höher, dass bei einem Wechsel der Produktion ein solcher Drehtisch nicht mehr verwendbar ist. Eine manuelle Verstellung während der automatisierten Bearbeitung ein und desselben Werkstückes ist in der Regel ausgeschlossen.

Eine Aufgabe der vorliegenden Erfindung besteht daher darin, eine wenigstens zweiachsige Drehtischanordnung anzugeben, die an geänderte Anforderungen besser anpassbar ist.

Eine andere Aufgabe besteht darin, eine wenigstens zweiachsige Drehtischanordnung anzugeben, deren Herstellung geringere Kosten erzeugt.

Eine Drehtischanordnung, die wenigstens die erstgenannte Aufgabe erfüllt, ist im Patentanspruch 1 angegeben. Die weiteren Patentansprüche geben bevorzugte Ausführungsformen und Herstellungsverfahren an.

Im Wesentlichen wird somit vorgeschlagen, zwei jeweils einachsige Drehtische zu einer zweiachsigen Drehtischanordnung zu kombinieren, wobei die Verbindung zwischen den beiden Drehtischen mittels eines Verbindungsteiles, insbesondere einer sogenannten Adapterplatte, hergestellt wird. Der erste Drehtisch, an dem der zweite Drehtisch angebracht ist und damit diesen in der Regel um eine Drehachse schwenkt, wird im Weiteren Schwenkantrieb genannt. Es muss sich bei diesem Antrieb jedoch nicht notwendigerweise um einen eigentlichen Drehtisch handeln.

Der zweite, verschwenkbare Drehtisch wird im Weiteren Drehantrieb genannt. Beide Antriebe verfügen über einen Motor und üblicherweise über ein in der Technik bekanntes Getriebe.

Die Anpassung dieser Anordnung an unterschiedliche Anwendungen wird überraschend einfach dadurch erreicht, dass die Adapterplatte eine Mehrzahl von Anbringungsmöglichkeiten des Drehantriebs aufweist. Weitere, vorteilhafte Möglichkeiten oder Weiterbildungen der Anordnung sind beispielsweise folgende:
- Die Befestigung der Adapterplatte am Drehantrieb verwendet im Wesentlichen vorhandene Befestigungsvorkehrungen.
- Die Adapterplatte kann durch Befestigungsmittel am Drehantrieb angebracht werden, die zugleich eine radiale und axiale Positionierung der Adapterplatte am Drehantrieb relativ zur Schwenkachse erlauben.
- Ausbildung der Adapterplatte als Ersatz einer abnehmbaren Gehäusepartie des Drehantriebs.
- Die Anordnung kann durch ein Gegenlager zusätzlich stabilisiert werden, dass das freie Ende des Drehantriebs stützt. Bevorzugt ist das Gegenlager analog der Lagerung auf der Seite des Schwenkantriebes ausgebildet, insbesondere unter Verwendung einer Adapterplatte.

Weitere mit der Erfindung erzielbare Vorteile gehen aus der folgenden Beschreibung eines bevorzugten Ausführungsbeispieles unter Bezugnahme auf Figuren vor:
- Fig. 1: Gesamtansicht einer zweiachsigen Drehtischanordnung mit einseitig gelagertem Drehantrieb;
- Fig. 2: Ansicht einer Adapterplatte mit Passschraubenstümpfen;
- Fig. 3: Teilschnitt durch die Adapterplatte;
- Fig. 4: Gesamtansicht einer Drehtischanordnung mit Gegenlager;
- Fig. 5: Gesamtansicht einer Drehtischanordnung wie Fig. 1, aber mit vereinfachter Adapterplatte;
- Fig. 6: Ansicht einer vereinfachten Adapterplatte; und
- Fig. 7: Ansicht einer Drehtischanordnung wie Fig. 5, jedoch mit Gegenlager.

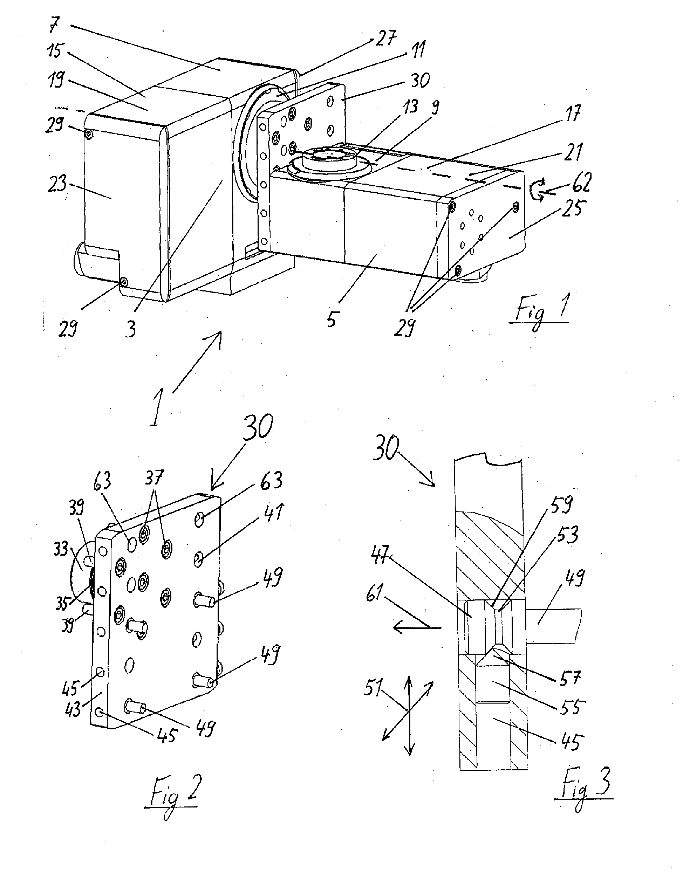

Fig. 1 zeigt eine Gesamtansicht einer Drehtischanordnung 1 für zwei Achsen. Sie umfasst zwei Antriebe, nämlich den Schwenkantrieb 3 und den Drehantrieb 5. Sie beinhalten jeweils einen Getriebeteil 7, 9 mit den von aussen zugänglichen Getriebeausgängen 11, 13. An das Getriebeteil angeflanscht ist der Motorteil 15, 17, in dem sich namentlich Motor und allfällige Elektronik befindet. Die Gehäuse der Motorteile 15, 17 bestehen zum Einen aus einem Formteil 19, 21, bevorzugt aus Aluminium, das mit einem Motorgehäusedeckel 23, 25 abgeschlossen ist. Das Getriebeteil 7 ist auf der dem Motorteil 15 abgewandten Seite mit einem Getriebedeckel 27 verschlossen. Die Motorgehäusedeckel 23, 25 wie auch der Getriebedeckel 27 sind mittels Schrauben 29 befestigt. Am Getriebeteil 9 des Drehantriebs 5 ist die Anbringung eines solchen Deckels analog Getriebedeckel 27 möglich. Im Beispiel ist hier jedoch die Adapterplatte 30 angebracht. Daraus geht hervor, dass Schwenkantrieb 3 und Drehantrieb 5 (mit Getriebedeckel statt Adapterplatte 30) grundsätzlich als normal verwendbare einachsige Drehtische ausgebildet sein können. Sie können dann nach Zerlegen der Drehtischanordnung als solche weiterverwendet oder als Komponenten in einer andersartigen Drehtischanordnung eingesetzt werden.

Die Adapterplatte 30 ist in Fig. 2 einzeln dargestellt. Auf der Rückseite sind die Vorkehrungen für das Anbringen am Getriebeausgang 11 zu erkennen. Es handelt sich zum Einen um einen Zylinder 33 mit O-Ring 35, der in das hohle Innere des Getriebeausganges 11 eingesteckt wird, um diesen zu verschliessen. Um den Zylinder 33 herum sind Schrauben 37 (im Beispiel: 6 Stück) angeordnet, deren Gewindeenden 39 in entsprechende Gewindelöcher im Getriebeausgang 11 eingedreht sind, um die Adapterplatte 30 am Getriebeausgang 11 zu befestigen. Der Zylinder 33 dient insbesondere der radialen Positionierung, während die Schrauben 37 die axiale Fixierung am Drehantrieb 3 vornehmen.

Für die Anbringung des Drehantriebes 5 befinden sich in der Adapterplatte 30 zwei Reihen von Passbohrungen 41. Von den jeweiligen Seitenflächen 43 erstreckt sich jeweils eine mit einem Gewinde ausgestattete Fixierungsbohrung 35 in jede der Passbohrungen 41.

Die Passbohrungen 41 sind vorgesehen, einen passgenau dazu geformten Kopf 47 einer Passschraube 49 aufzunehmen (siehe Fig. 3). Die Passschrauben 49 sind in das Gehäuse des Getriebeteiles 9 eingeschraubt. Durch die passgenaue Ausführung ihrer Köpfe 47 in Verbindung mit den ebenso exakt ausgeführten Passbohrungen 41 ist nach Aufsetzen der Adapterplatte 30 auf die Stirnfläche des Getriebeteiles 9 mit eingeschraubten Passschrauben 49 bereits eine radiale Positionierung (Pfeilkreuz 51) der Adapterplatte 30 relativ zum Drehantrieb 5 gewährleistet. Insbesonder werden die Passelemente (Köpfe 47, Passbohrungen 41) mit einer engen Toleranz gefertigt.

Für die axiale Positionierung und auch dichten Abschluss des Getriebeteiles 9 an der Adapterplatte 30 ist der Kopf 47 mit einer umlaufenden Kerbe 53 versehen. Durch die Fixierungsbohrung 45 ist eine Fixierungsschraube 55 (hier eine Madenschraube) eingedreht. Das kegelförmige vordere Ende 57 der Fixierungsschraube 55 legt sich dabei an die vordere Schräge 59 der Kerbe 53 an. Weiteres Eindrehen der Fixierungsschraube 55 bewirkt wegen den schrägen, aneinanderliegenden Flächen 59 eine axiale Kraft in Richtung des Pfeiles 61 auf den Kopf 47 der Passschraube 49. Durch Eindrehen der Fixierungsschraube 55 ist es damit möglich, das Getriebeteil 9 an die Adapterplatte 30 heranzuziehen beziehungsweise anzuklemmen und damit eine axiale Fixierung und einen dichten Verschluss durch die Adapterplatte zu bewirken.

Wie aus Fig. 2 ersichtlich, können die vier nötigen Passschrauben 49 in drei verschiedenen Positionen in der Adapterplatte 30 fixiert werden. Die dargestellte Position bewirkt dabei, dass sich der Getriebeausgang 13 in etwa auf der Schwenkachse des Schwenkantriebes 3 befindet. Allerdings ist in dieser Position durch die Schwenkplatte 30 die Grösse eines Werkstückes, das am Getriebeausgang 13 befestigt werden kann, seitlich beschränkt. In der obersten Position (Verwendung der obersten Passlöcher 63) befindet sich der Getriebeausgang 13 ausserhalb der Schwenkachse und führt somit beim Schwenken des Drehantriebes 5 eine Kreisbewegung durch, die bei der Führung der Werkzeuge eines Bearbeitungszentrums berücksichtigt werden muss, dafür ist die seitliche Beschränkung der Grösse des anbringbaren Werkstückes im Wesentlichen aufgehoben.

Im Folgenden werden Abwandlungen des beschriebenen Ausführungsbeispieles angegeben, wobei übereinstimmende Bezugszeichen dieselben, beziehungsweise analoge Teile bezeichnen.

In der Drehtischanordnung 70, die ansonsten der Drehtischanordnung 1 entspricht, wird anstelle einer Adapterplatte 30 mit verschiedenen Anordnungsmöglichkeiten des Drehantriebes 5 eine vereinfachte Adapterplatte 72 verwendet. Sie unterscheidet sich von der Adapterplatte 30 darin, dass nur ein Satz Passbohrungen 41 (nicht sichtbar) vorhanden ist und somit der Drehantrieb 5 nur in der dargestellten Position anbringbar ist. Die überraschende Einfachheit der Konstruktion zeigt sich auch darin, dass einzig durch Austauschen der vereinfachten Adapterplatte 72 gegen eine Adapterplatte 30 die Möglichkeit besteht, den Drehantrieb 5 in verschiedenen Positionen anzubringen.

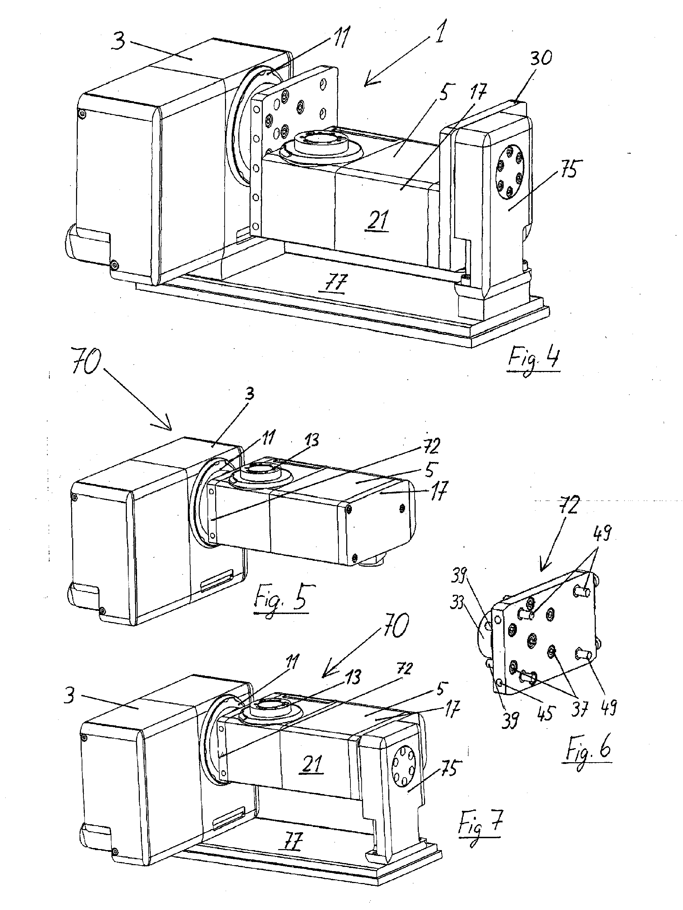

Fig. 6 zeigt die Adapterplatte 72 vereinzelt in einer Darstellung analog Fig. 2.

Die Figg. 4 und 7 zeigen jeweils eine Variante der Drehtische der Fig. 1 beziehungsweise Fig. 5, bei der das Schwenkantrieb-ferne Ende des Drehantriebes 5 in einem Gegenlager 75 gehalten ist. Das Gegenlager 75 steht auf einer Grundplatte 77, die am Schwenkantrieb 3 angebracht ist. Durch diese Konstruktion ergibt sich eine erhöhte Steifigkeit und damit Widerstandsfähigkeit der Gesamtanordnung gegen Kräfte, die auf den Getriebeausgang 13 wirken. Das Gegenlager 75 weist zum Drehantrieb 5 hin einen Ausgang auf, der dem Getriebeausgang 11 entspricht. Damit kann zwischen Gegenlager 75 und dem Motorgehäuseteil 17 einfacherweise eine Adapterplatte 30 beziehungsweise 72 verwendet werden. Allenfalls kann es nötig sein, eine spiegelverkehrte Ausführung einzusetzen. Von besonderem Vorteil ist bei dieser Anordnung ein steifes Motorgehäuseteil 21, wie es durch die Verwendung eines Formteiles erreicht wird. Darüber hinaus ist auch die Gesamtanordnung insgesamt dicht, wodurch die bekannten Probleme mit der Abdichtung des Motorteils 17 gegenüber den Umgebungseinflüssen in einem Bearbeitungszenter hinfällig sind.

Ebenso wie durch Zerlegen des Drehtisches und Versehen des Drehantriebes 5 mit einem Deckel am Getriebeteil und gegebenenfalls auch am Motorteil 17 zwei unabhängig verwendbare einachsige Drehtischantriebe zu erhalten, ist es möglich, einen vorhandenen Drehantrieb vor Ort auf einfache Art und Weise mit einem anderen Drehantrieb zu einem zweiachsigen Drehtisch zu vereinigen. Dazu ist es in Umkehrung im Wesentlichen nötig, wenigstens den Deckel des Getriebes 13 zu entfernen und durch eine Adapterplatte 30 oder 72 zu ersetzen. Durch die beschriebene Befestigungsart mittels Passschrauben und seitlich eingreifenden Fixierschrauben ist dafür einfachstes Werkzeug ausreichend. Der so umgerüstete Drehantrieb 5 wird dann am Getriebeausgang 11 eines zweiten Einachs-Drehtisches oder äquivalente Antriebs befestigt, der sich somit zum Schwenkantrieb 3 wandelt.

Aus der vorangehenden Beschreibung eines Ausführungsbeispieles sind dem Fachmann zahlreiche Abwandlungen und Ergänzungen möglich, ohne den Schutzbereich der vorliegenden Erfindung zu verlassen, der durch die beigefügten Patentansprüche definiert wird. Insbesondere ist denkbar:
- Der Schwenkantrieb 3 kann die gleich Bauform wie der Drehantrieb 5 aufweisen.
- Die Adapterplatte 30 kann auch mehr oder weniger Passbohrungen 41 aufweisen entsprechend einer grösseren oder kleineren Zahl von möglichen radialen Positionen des Drehantriebes 5.
- Eine andere Paarung als schräg-schräg zwischen der Spitze 57 der Fixierungsschrauben 55 und der Wand der Kerbe 53 wird verwendet, z.B. runde Spitze 57 auf schräger schräger Wand oder kegelförmige Spitze 57 auf dem Randbereich einer steiler ausgeführter Wand der Kerbe 53.

## Patentansprüche

1. Drehtischanordung (1) zum Bewegen eines Werkstücks um mindestens zwei Achsen mit mindestens einem ersten und einem zweiten motorischen Antrieb (3, 5) für je eine Achse, **dadurch gekennzeichnet, dass**
- der zweite motorischer Antrieb (5) über eine Kupplungsanordnung am ersten Antrieb (3) angebracht ist, so dass der zweite Antrieb durch den ersten Antrieb bewegbar ist,
- die Kupplungsanordnung ein Verbindungsteil (30) umfasst, das lösbar an wenigstens einem von erstem und zweitem Antrieb angebracht ist, und
- das Verbindungsteil die Anbringung des zweiten Antriebs in mindestens zwei Positionen gestattet.

2. Drehtischanordnung (1) gemäss Anspruch 1, **dadurch gekennzeichnet, dass** die zwei Positionen verschiedene Abstände eines an der Drehtischanordnung angebrachten Werkstücks von der Achse (62) des ersten motorischen Antriebs (3) darstellen.

3. Drehtischanordnung (1) gemäss einem der Ansprüche 1 bis 2, **dadurch gekennzeichnet, dass** das Verbindungsteil (30,72) am zweiten motorischer Antrieb (5) mittels Befestigungsteilen (49) lösbar angebracht ist, wobei mindestens eines der Befestigungsteile, bevorzugt der für die Anbringung des Verbindungsteils wesentliche Teil der Befestigungsteile, im wesentlichen stiftförmig ist und am ersten Befestigungsteilende (47) radial genau passend zu einer komplementär ausgebildeten Aufnahme (41, 63) ausgebildet ist, das erste Befestigungsteilende zusätzlich eine Einrichtung zur axialen Klemmung (53) aufweist, und die Aufnahme sich im zweiten motorischen Antrieb (5) oder im Verbindungsteil (30, 72) befindet.

4. Drehtischanordnung (1) gemäss Anspruch 3, **dadurch gekennzeichnet, dass** die Aufnahme im wesentlichen ein Loch (41, 63) ist, das erste Befestigungsteilende (47) im wesentlichen ein zur Aufnahme radial passgenau ausgeführter Zylinder mit einer Vertiefung (53) ist, die Vertiefung wenigstens teilweise einen Wandbereich (59) aufweist, der in einer deutlich von einem rechten Winkel abweichenden Richtung von der Längsachse des Befestigungsteils (49) verläuft, so dass durch ein radial in die Vertiefung eindringendes Fixierungsteil (55) eine axiale Zugwirkung auf des Befestigungsteil bewirkt werden kann.

5. Drehtischanordnung (1) gemäss Anspruch 4, **dadurch gekennzeichnet, dass** sich die Aufnahme (41, 63) im Verbindungsteil (30, 72) befindet und das Verbindungsteil eine Anbringungseinrichtung (45) für das Fixierungsteil (5) aufweist, wobei die Anbringungseinrichtung einen Zugang des Fixierungsteils zur Aufnahme aufweist.

6. Drehtischanordnung (1) gemäss einem der Ansprüche 4 bis 5, **dadurch gekennzeichnet, dass** die Vertiefung (53) im wesentlichen eine umfänglich um das erste Befestigungsteilende (47) umlaufende Kerbe ist und die erste Wand (59) im wesentlichen eine Seitenwand der Kerbe ist, bevorzugt die zum Ende des Befestigungteils (49) hin gelegene.

7. Drehtischanordnung (1,70) gemäss einem der Ansprüche 4 bis 6, **dadurch gekennzeichnet, dass** das Fixierungsmittel (55) eine Schraube und bevorzugt eine Madenschraube ist und die Eingriffseinrichtung (45) im wesentlichen ein Loch ist, das zur Aufnahme hin offen ist und ein Gewinde für das Fixierungsmittel aufweist.

8. Drehtischanordnung (1, 70) gemäss einem der Ansprüche 1 bis 7, **dadurch gekennzeichnet, dass** der zweite Antrieb (5) durch den ersten Antrieb (3) um eine Schwenkachse (62) drehbar ist und in Richtung der Schwenkachse gegenüber dem Verbindungssteil (30) am zweiten motorischen Antrieb (5) ein zweites Verbindungsteil vorhanden ist, das in einem Lager (75) um die Schwenkachse drehbar gelagert ist.

9. Drehtischanordnung (1) gemäss Anspruch 8, **dadurch gekennzeichnet, dass** wenigstens die Vorkehrungen im zweiten Verbindungsteil für die Befestigung des zweiten motorischen Antriebs (5) gleich wie diejenigen des ersten Verbindungsteils ausgeführt sind.

10. Verfahren zur Herstellung einer Drehtischanordnung (1, 70) gemäss einem der Ansprüche 1 bis 9, **dadurch gekennzeichnet, dass** ein Gehäuseteil eines Drehtischantriebs (5) abgenommen und das Verbindungsteil (30, 72) unter Verwendung der Befestigungsvorkehrung für das Gehäuseteil am Antrieb befestigt wird, um einen zweiten Drehtischantrieb (5) zu erhalten, wobei der Drehtischantrieb am Verbindungsteil in genau einer Position oder mindestens zwei Positionen anbringbar ist.
